# EUROPÄISCHE PATENTSCHRIFT

(11) **EP 2 487 061 B1**
(45) Veröffentlichungstag und Bekanntmachung des Hinweises auf die Patenterteilung: **24.04.2013**
(21) Anmeldenummer: 12000837.0
(22) Anmeldetag: 09.02.2012
(51) Int. Cl.: B60K 17/06, B60K 17/346

(54) **Antriebsanordnung für ein Kraftfahrzeug**
Drive assembly for a motor vehicle
Agencement d'entraînement pour un véhicule automobile

(30) Priorität: 14.02.2011 DE 102011011171
(43) Veröffentlichungstag der Anmeldung: 15.08.2012
(73) Patentinhaber: Audi AG, 85045 Ingolstadt (DE)
(72) Erfinder: Märkl, Johann, 85049 Ingolstadt (DE)
(74) Vertreter: Lehle, Josef

(56) Entgegenhaltungen:
- EP-A1- 0 683 065
- EP-A2- 1 914 105
- DE-A1- 1 455 901
- DE-A1- 19 960 621
- US-A- 4 723 622

## Beschreibung

Die Erfindung betrifft eine Antriebsanordnung für ein Kraftfahrzeug mit zwei angetriebenen Achsen gemäß dem Oberbegriff des Patentanspruches 1.

Bei derartigen Antriebsanordnungen unterscheidet man im Wesentlichen permanente Antriebssysteme mit einem dazwischen geschalteten Verteilerdifferenzial zur Vermeidung von Verspannungen im Antriebssystem und sogenannte hang-on-Systeme mit einer im Antriebsstrang zur einen Achse des Kraftfahrzeuges integrierten Viscokupplung oder dergleichen. Bei Letzterem wird die zweite Achse nur bei auftretendem Radschlupf aktiviert.

Durch die DE 14 55 901 A1 wurde für ein fahrbares Arbeitsgerät wie einen Radlader auch schon vorgeschlagen, für den Schnellgang (zum Beispiel zum Überführen des Arbeitsgerätes an einen anderen Einsatzort) eine zusätzliche Kupplung vorzusehen, die mit dem Einschalten des Schnellganges automatisch den Allradbetrieb aufhebt bzw. das Antriebsmoment nur auf eine Achse leitet. Hintergrund dieser Maßnahme ist insbesondere, den für den Arbeitsbetrieb besonders hoch übersetzten Getriebeteil zur Vermeidung hoher Drehzahlbelastungen im Schnellgang abzuschalten.

Aufgabe der Erfindung ist es, eine Antriebsanordnung der gattungsgemäßen Art vorzuschlagen, die bei Kraftfahrzeugen mit mehreren Vorwärtsgängen (zum Beispiel mit bis zu acht Gängen) und Abtrieb auf beide Achsen einen günstigen Getriebewirkungsgrad und eine baulich und steuerungstechnisch einfache Getriebekonstruktion ermöglicht.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass das Wechselgetriebe in zwei Teilgetriebe aufgeteilt ist, von denen ein Teilgetriebe über mehrere Vorwärtsgänge und die eine Abtriebswelle ausschließlich auf eine erste Achse abtreibt und das zweite Teilgetriebe über die anderen Vorwärtsgänge und gegebenenfalls den Rückwärtsgang auf beide Abtriebswellen abtreibt. Die Erfindung zielt dabei insbesondere darauf ab, in den Vorwärtsgängen mit höherem Abtriebsdrehmoment beide Achsen und in den Vorwärtsgängen mit niedrigerem Abtriebsdrehmoment ausschließlich nur die eine Achse des Kraftfahrzeuges anzutreiben. Die besagten Teilgetriebe können nur funktionell durch entsprechende Verknüpfung der Getriebeelemente verwirklicht sein und deshalb nahezu keinen Mehraufwand erfordern.

Insbesondere wird vorgeschlagen, dass bei einem Wechselgetriebe mit mehreren, zum Beispiel zumindest fünf Vorwärtsgängen zumindest der niedrigste Vorwärtsgang oder mehrere niedrige Vorwärtsgänge , zum Beispiel zwei oder drei niedrigere Vorwärtsgänge, und gegebenenfalls der Rückwärtsgang dem zweiten, beide Abtriebswellen antreibenden Teilgetriebe zugeordnet sind, während die höheren, ins Schnelle übersetzten Vorwärtsgänge, zumindest einer der höchsten Gänge, nur eine Achse, zum Beispiel die Vorderachse des Kraftfahrzeuges antreiben.

Dabei können die zwei Teilgetriebe in einem einheitlichen Getriebegehäuse angeordnet sein, wobei die zwei koaxial im Getriebegehäuse gelagerten Abtriebswellen über nur eine zusätzlich erforderliche, schaltbare Kupplung miteinander verbindbar sind. Diese zusätzliche Kupplung ist insbesondere dann erforderlich, wenn durch eine entsprechende Abkoppeleinrichtung an der anderen Achse bzw. am anderen Achstrieb eine Stillsetzung dieses gesamten Achsantriebes möglich ist.

In vorteilhafter Weiterbildung der Erfindung kann die schaltbare Kupplung eine Doppelsynchronkupplung sein, in deren einer Schaltstellung die beiden Abtriebswellen miteinander gekoppelt sind und in deren anderer Schaltstellung ein weiterer Vorwärtsgang, insbesondere ein ins Schnelle übersetzter E-Gang schaltbar ist, der über die erste Abtriebswelle nur auf die eine Achse des Kraftfahrzeuges abtreibt. Ist in dem Wechselgetriebe bereits ein derartiger E-Gang vorgesehen, so kann die diesen schaltende Kupplung entsprechend modifiziert sein.

In baulich und getriebetechnisch besonders günstiger Weise kann die zweite Abtriebswelle des Wechselgetriebes eine Hohlwelle sein, die ein nachgeschaltetes Verteilerdifferenzial antreibt, dessen eines Abtriebselement mit der abschaltbaren Achse verbunden ist und dessen anderes Abtriebselement im Rücktrieb durch die hohle Abtriebswelle hindurchgeführt ist und über die schaltbare Kupplung bzw. Doppelsynchronkupplung mit der ersten Abtriebswelle kuppelbar ist. Daraus resultiert zudem eine einfache Anordnung des Verteilerdifferenziales, das nachgeschaltet in einfacher Weise an das Wechselgetriebe adaptierbar ist und bei nicht geordertem Allradantrieb ohne wesentliche Änderungen der Getriebekonstruktion entfallen kann.

In einer weiteren, vorteilhaften Ausgestaltung der Erfindung kann das Wechselgetriebe ein Doppelkupplungsgetriebe mit zwei koaxial gelagerten Eingangswellen sein, die alternierend über die Doppelkupplung von der Antriebsmaschine beaufschlagbar sind und die in der Aufteilung in zwei Teilgetriebe über das erste Teilgetriebe mit mehreren Vorwärtsgängen die erste Abtriebswelle nur zu der einen Achse des Kraftfahrzeuges und über das zweite Teilgetriebe über mehrere Vorwärtsgänge und ggf. einen Rückwärtsgang auf die achsparallel zur ersten Abtriebswelle angeordnete zweite Abtriebswelle abtreibt, die zudem über einen Zahnradsatz mit der ersten Abtriebswelle gekoppelt ist. Bei entsprechender Auslegung und Zuordnung der Vorwärtsgänge auf die beiden Eingangswellen und die beiden Abtriebswellen gelingt es, ohne eine zusätzliche Kupplung die beiden Antriebsarten (ausschließlich eine Achse oder beide Achsen) den niedrigeren und höheren Vorwärtsgängen zuzuordnen.

Dabei kann wiederum die zweite Abtriebswelle als eine Hohlwelle ausgeführt sein und das Ausgleichsgehäuse eines nachgeschalteten Verteilerdifferenziales antreiben, das über eine erste Ausgangswelle die zweite Achse des Kraftfahrzeuges antreibt und im Rücktrieb durch die Hohlwelle hindurch über eine zweite Ausgangswelle trieblich über den Zahnradsatz mit der ersten Abtriebswelle gekoppelt ist.

Des Weiteren können zur Erzielung einer einfachen Getriebekonstruktion die schaltbaren Loszahnräder der beide Achsen antreibenden Vorwärtsgänge und gegebenenfalls des Rückwärtsganges des zweiten Teilgetriebes auf der zweiten, als Hohlwelle ausgebildeten Abtriebswelle angeordnet sein und somit ohne zusätzliche schaltbare Kupplung die Antriebsverbindung auf die erste Abtriebswelle und die zweite Abtriebswelle bzw. die Ausgangswelle zum Antrieb beider Achsen herstellen.

Alternativ dazu kann in der zweiten Abtriebswelle bzw. in der Ausgangswelle des Verteilerdifferenziales zum Antrieb der einen Achse des Kraftfahrzeuges eine Doppelkupplung angeordnet sein, die in der einen Schaltstellung die beiden Teilgetriebe miteinander koppelt und in der anderen Schaltstellung einen zusätzlichen Vorwärtsgang mit einem Loszahnrad auf der Abtriebs- bzw. Ausgangswelle und einem Festzahnrad auf der einen Eingangswelle aktiv schaltet, so dass mit einer zusätzlichen Kupplung zugleich ein weiterer Vorwärtsgang, insbesondere ein E-Gang schaltbar ist.

Schließlich kann bei einem Doppelkupplungsgetriebe noch vorgesehen sein, dass in einem Fahrzustand des Kraftfahrzeuges mit nur einer angetriebenen Achse bei auftretendem Radschlupf temporär über die zweite Kupplung der Doppelkupplungseinrichtung ein auf beide Achsen abtreibender Vorwärtsgang bei in Schlupfbetrieb gesteuerter Kupplung zugeschaltet ist. Eine derartige Maßnahme ist relativ einfach verwirklichbar, weil derartige Doppelkupplungen (zumeist hydraulisch gesteuerte Lamellenkupplungen) ohnehin schlupfgesteuert betrieben sind, um komfortable Gangwechsel ohne Zugkraftunterbrechungen zu verwirklichen.

Mehrere Ausführungsbeispiele der Erfindung sind im Folgenden mit weiteren Einzelheiten näher erläutert. Die schematische Zeichnung zeigt in:
- Fig. 1: als Blockschaltbild ein für den Frontantrieb und den Antrieb einer hinteren Achse ausgelegtes Geschwindigkeits-Wechselgetriebe mit mehreren Vorwärtsgängen 1 bis 6 und einem Rückwärtsgang R, wobei die Gänge R, 1 bis 4 als ein Teilgetriebe auf beide Abtriebswellen und die restlichen Gänge als ein zweites Teilgetriebe nur auf die Vorderachse abtreiben;
- Fig. 2: das Wechselgetriebe nach Fig. 1, mit einem zusätzlichen Vorwärtsgang, der über eine entweder beide Abtriebswellen koppelnde oder den Vorwärtsgang zuschaltende Doppelsynchronkupplung aktivierbar ist;
- Fig. 3: ein Doppelkupplungsgetriebe mit wiederum zwei Teilgetrieben, deren Gänge R und 1 bis 3 auf beide Achsen des Kraftfahrzeuges und die Gänge 4 bis 7 nur auf die Vorderachse abtreiben; und
- Fig.4: das Doppelkupplungsgetriebe nach Fig. 3, jedoch mit einer zusätzlichen Doppelsynchronkupplung, mittels der entweder ein zusätzlicher Vorwärtsgang zuschaltbar ist oder die auf die beiden Achsen abtreibenden Abtriebswellen koppelbar sind.

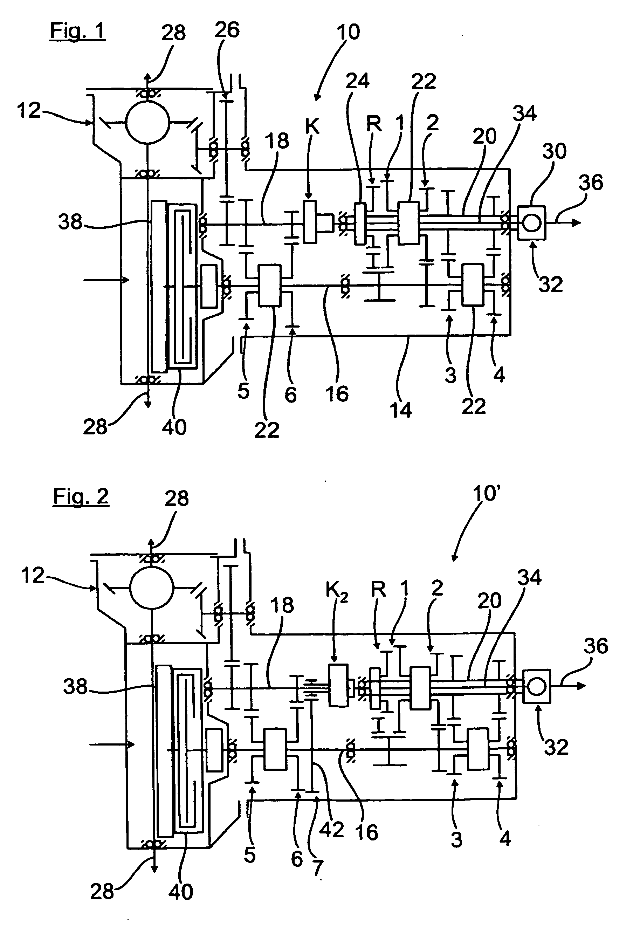

In der Fig. 1 ist als Blockschaltbild ein Geschwindigkeits-Wechselgetriebe 10 einer Antriebsanordnung für Kraftfahrzeuge dargestellt, mit einem integrierten Vorderachs-Differenzial 12, in dessen Gehäuse 14 eine Getriebe-Eingangswelle 16 und achsparallel dazu zwei koaxial angeordnete Abtriebswellen 18, 20 drehbar gelagert sind.

Das Wechselgetriebe 10 weist jeweils aus Festzahnrädern und Loszahnrädern (ohne Bezugszeichen) gebildete Vorwärtsgänge 1 bis 6 und einen Rückwärtsgang R auf, die auf der Eingangswelle 16 und auf den Abtriebswellen 18, 20 angeordnet sind und die über allgemein mit 22 bezeichnete Doppelsynchronkupplungen und für den Rückwärtsgang R eine Einfach-Synchronkupplung 24 alternierend aktivierbar sind. In die Zahnradstufe R ist in bekannter Weise ein Umkehrzahnrad eingeschaltet. Die Synchronkupplungen 22, 24 sind in bei Schaltgetrieben üblicher Bauart ausgeführt.

Die Abtriebswelle 18 des Wechselgetriebes 10 treibt über einen weiteren Zahnradsatz 26 auf das seitlich angebaute Differenzial 12 ab, das über quer zur Eingangswelle 16 verlaufende Halbwellen 28 die vorderen Räder des Kraftfahrzeuges antreibt.

Die weitere Abtriebswelle 20 ist als Hohlwelle ausgeführt, die auf das Ausgleichsgehäuse 30 eines nur angedeuteten Verteilerdifferenziales 32 wirkt. Die eine Ausgangswelle 36 des Verteilerdifferenziales 32 ist mit dem hinteren, die Hinterräder des Kraftfahrzeuges antreibenden Differenzial trieblich verbunden (nicht dargestellt), während die zweite Ausgangswelle 34 im Rücktrieb durch die Hohlwelle 20 hindurch zu einer formschlüssig schaltbaren Kupplung K geführt ist, mittels der die Abtriebswelle 18 mit der Ausgangswelle 34 kuppelbar ist.

Die Kupplung K ist ebenfalls als eine Einfach-Synchronkupplung ausgebildet. Die die Kupplung K und die Synchronkupplungen 22, 24 betätigenden Schalteinrichtungen des Wechselgetriebes 10 sind nicht dargestellt; sie sind jedoch so ausgeführt, dass mit dem Einlegen der Gänge R und 1 bis 4 die Kupplung K automatisch geschlossen ist, während in den Gängen 5 und 6 die Kupplung K geöffnet ist.

Die über ein Schwungrad 38 und eine Trennkupplung 40 von der Antriebsmaschine des Kraftfahrzeuges angetriebene Eingangswelle 16 treibt über die Vorwärtsgänge 1 bis 4 und den Rückwärtsgang R als ein funktionell erstes Teilgetriebe die Abtriebswelle bzw. Hohlwelle 20 an, die über das Verteilerdifferenzial 32 und die Ausgangswellen 34, 36 die Hinterräder des Kraftfahrzeuges und bei geschlossener Kupplung K und die Abtriebswelle 18 die Vorderräder des Kraftfahrzeuges im Allradbetrieb antreibt.

In den Vorwärtsgängen 5 und 6 treibt die Eingangswelle 16 bei geöffneter Kupplung K als zweites Teilgetriebe nur auf die Abtriebswelle 18 bzw. über das vordere Differenzial 12 auf die Vorderräder des Kraftfahrzeuges, während die Ausgangswelle 34 und damit funktionell die Abtriebswelle 20 mit dem Verteilerdifferenzial 32 abgekoppelt sind.

Das Kraftfahrzeug wird somit in den Gängen R und 1 bis 4 bei jeweils entsprechend geschalteter Synchronkupplung 22, 24 und automatisch geschlossener Kupplung K an allen Rädern vorwärts oder rückwärts angetrieben, während bei den geschalteten Vorwärtsgängen 5 und 6 und bei automatisch geöffneter Kupplung K nur die Vorderräder des Kraftfahrzeuges angetrieben sind.

Die Fig. 2 zeigt ein weiteres Wechselgetriebe 10' der in der Fig. 1 beschriebenen Art, bei dem jedoch ein weiterer, ins Schnelle übersetzter 7. Vorwärtsgang vorgesehen ist. Dieser setzt sich aus einem Zahnradsatz mit einem Festzahnrad 42 auf der Eingangswelle 16 und einem Loszahnrad 44 auf der Abtriebswelle 18 zusammen.

Der weitere Vorwärtsgang 7 ist über die Kupplung K2 schaltbar, die als an sich bekannte Doppelsynchronkupplung ausgeführt ist und die aus einer Neutralstellung heraus entweder die Ausgangswelle 34 des Verteilerdifferenziales 32 mit der Abtriebswelle 18 kuppelt oder in der anderen Schaltstellung die Zahnradstufe 42, 44 für den 7. Gang aktiviert.

Durch die Modifikation der Kupplung K2 kann somit bei entsprechender Auslegung der Schalteinrichtungen des Wechselgetriebes 10' zusätzlich zur Umschaltung von Allradantrieb (Gänge R und 1 bis 4) auf Vorderradantrieb (Gänge 5 bis 7) auch der 7.Gang geschaltet werden, der insbesondere als besonders drehzahlschonender Schnellgang ausgelegt ist. Die Kupplung K2 ist dabei in den Gängen 5 und 6 in Neutralstellung oder in den Gängen R und 1 bis 4 in der Schaltstellung, in der sie die beiden Wellen 18, 34 miteinander kuppelt oder aber in der anderen entgegengesetzten Schaltstellung, in der sie den 7. Gang aktiviert.

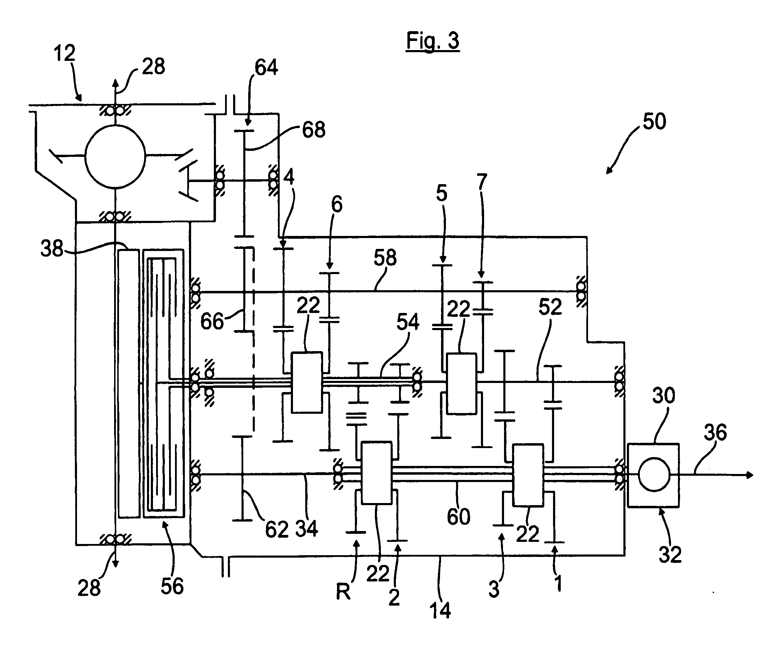

Die Fig. 3 zeigt ein zu den Fig. 1 und 2 alternatives Geschwindigkeits-Wechselgetriebe 50, das als Doppelkupplungsgetriebe ausgebildet ist. Funktionell gleiche Teile sind mit gleichen Bezugszeichen versehen.

Das Wechselgetriebe 50 weist zwei koaxiale Getriebe-Eingangswellen 52, 54 auf, von denen die eine Eingangswelle 54 als Hohlwelle ausgeführt ist, durch die hindurch sich die zweite Eingangswelle 52 erstreckt.

Angetrieben werden die beiden Eingangswellen 52, 54 über eine Doppelkupplung 56, die alternierend das Antriebsmoment der Antriebsmaschine über ein Schwungrad (oder ZMS) 38 auf die Eingangswellen 52, 54 leitet. Die Doppelkupplung 56 setzt sich in bekannter Weise aus zwei nass laufenden, hydraulisch gesteuerten Lamellenkupplungen zusammen.

Die Eingangswellen 52, 54 treiben über Gangzahnradsätze R und 1 bis 7 mit jeweils Loszahnrädern und Festzahnräder (ohne Bezugszeichen) auf zwei Abtriebswellen 58, 60 ab, von denen die Abtriebswelle 60 wiederum als Hohlwelle ausgeführt ist.

Die Vorwärtsgänge 1 bis 7 und der Rückwärtsgang R sind über Doppelsynchronkupplungen 22 mittels nicht dargestellter Schalteinrichtungen aktivierbar.

Die hohle Abtriebswelle 60 treibt das Ausgleichsgehäuse 30 eines Verteilerdifferenziales 32 an, dessen Ausgangswelle 36 in nicht dargestellter Weise ein hinteres Achsdifferenzial bzw. die Hinterräder des Kraftfahrzeuges antreibt.

Die zweite Ausgangswelle 34 des Verteilerdifferenziales 32 ist im Rücktrieb durch die Abtriebswelle 60 hindurch nach vorne geführt und trägt ein Zahnrad 62 eines Zahnradtriebes 64, mit einem weiteren Zahnrad 66 auf der Abtriebswelle 58 und einem das vordere Achsdifferenzial 12 antreibenden Zahnrad 68.

Die Abtriebswellen 58, 60 mit der Ausgangswelle 34 sind relativ zu den Eingangswellen 52, 54 des Getriebes 50 umfangsmäßig derart versetzt zueinander angeordnet, dass deren abtreibende Zahnräder 62, 64 abweichend von der Zeichnung Fig. 3 ständig mit dem Zahnrad 68 in Eingriff sind (angedeutet mit der gestrichelt eingezeichneten Linie).

Die über die Synchronkupplungen 22 schaltbaren Loszahnräder der Gangstufen 4, 6, 5, 7 sind auf den Eingangswellen 52, 54 angeordnet, während deren Festzahnräder wie ersichtlich auf der Abtriebswelle 58 befestigt sind.

Des Weiteren sind die Loszahnräder der Gangstufen R, 1 bis 3 auf der hohlen Abtriebswelle 60 gelagert und über die weiteren Synchronkupplungen 22 schaltbar, während die korrespondierenden Festzahnräder auf den Eingangswellen 52, 54 angeordnet sind.

Daraus resultieren funktionell zwei Teilgetriebe, von denen das Eine in den Vorwärtsgängen 4 bis 7 nur auf das vordere Achsdifferenzial 12 abtreibt, während die Ausgangswelle 34, das Verteilerdifferenzial 32 und die Abtriebs-Hohlwelle 60 antriebslos geschaltet sind (die hohle Abtriebswelle 60 kann frei drehen).

In den Gangstufen R und 1 bis 3 treiben die Eingangswellen 52, 54 alternierend auf die Abtriebswelle 60 und von dieser über das Verteilerdifferenzial 32 auf die Ausgangswelle 36 für die Hinterräder und auf die Ausgangswelle 34, die über den Zahnradsatz 64 ferner das vordere Achsdifferenzial 12 bzw. die Vorderräder des Kraftfahrzeuges antreibt.

Die den Eingangswellen 52, 54 und den Abtriebswellen 58, 60 zugeordneten Vorwärtsgangstufen 1 bis 7 sind getriebetechnisch ferner in bei Doppelkupplungsgetrieben bekannter Weise so ausgelegt, dass der jeweils nächst höhere Vorwärtsgang (zum Beispiel von drei auf vier) im Kraftfluss jeweils einer anderen Eingangswelle (zum Beispiel Gangstufe 3 über Eingangswelle 52, Gangstufe 4 über Eingangswelle 54, usw.) zugeordnet ist und somit alternierend über die beiden Trennkupplungen der Doppelkupplung 56 aktivierbar ist.

Dadurch ist es bei entsprechender Auslegung der elektronischen Steuerung des Getriebes 50 mit Überwachung u.a. des Radschlupfes der angetriebenen Räder des Kraftfahrzeuges möglich, zum Beispiel im 4.Vorwärtsgang (Antrieb nur der Vorderachse) bei auftretendem, unzulässigen Radschlupf an den Vorderrädern den 3. Vorwärtsgang durch Schließen der entsprechenden Synchronkupplung 22 und schlupfgesteuertem Schließen der zweiten Trennkupplung zuzuschalten und Antriebsmoment zusätzlich auf die Hinterräder auszuüben. Es versteht sich, dass diese Aufschaltung aufgrund der gegebenen Drehzahlunterschiede in den beiden Gangstufen nur temporär und bei hohem Radschlupf durchführbar ist.

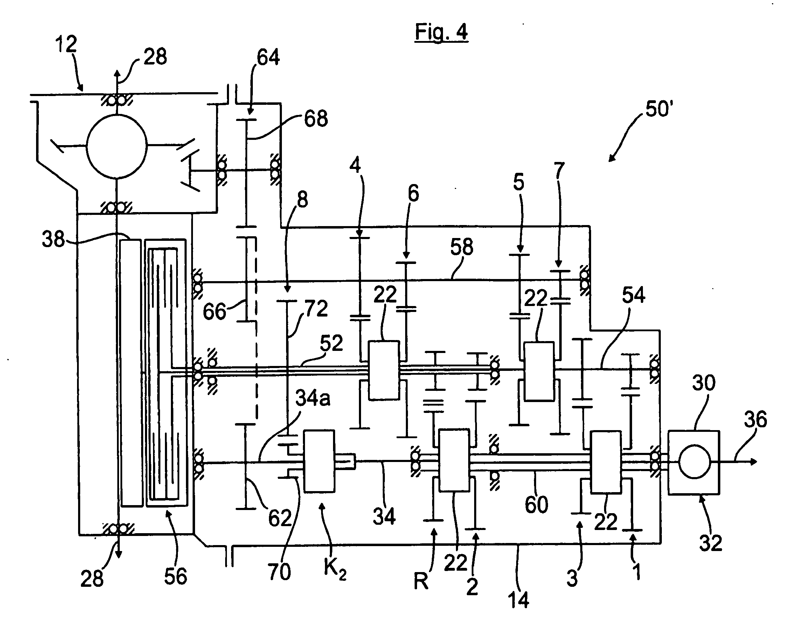

Die Fig. 4 zeigt ein weiteres Doppelkupplungsgetriebe 50', das nur soweit beschrieben ist, als es sich von dem Doppelkupplungsgetriebe 50 der Fig. 3 unterscheidet. Gleiche Teile sind mit gleichen Bezugszeichen versehen.

Gemäß der Fig. 4 ist in die Ausgangswelle 34 zwischen dem Verteilerdifferenzial 32 und dem abtreibenden Zahnrad 62 der Zahnradstufe 64 eine Doppelkupplung K2 eingeschaltet, die aus einer Neutralstellung heraus in der einen Schaltstellung die Ausgangswelle 34 durchgängig schaltet und in der anderen Schaltstellung ein auf dem vorderen Abschnitt 34a der Ausgangswelle 34 drehbar gelagertes Loszahnrad 70 mit einem Festzahnrad 72 auf der Eingangswelle 52 kuppelt und somit einen 8. Vorwärtsgang (E-Gang) aktiviert. Der Kraftfluss verläuft dabei von der Eingangswelle 52 auf den abgekuppelten Abschnitt 34a der Ausgangswelle 34 und über den Zahnradsatz 64 auf das vordere Achsdifferenzial 12.

Die Doppelkupplung K2 ist bevorzugt wiederum als an sich bekannte Doppelsynchronkupplung ausgeführt.

Wenn das Verteilerdifferenzial 32 in an sich bekannter Weise als Sperrdifferenzial ausgelegt ist, kann bei einer Schaltstellung der Doppelkupplung K2, in der der Abschnitt 34a mit der weiteren Ausgleichswelle 34 verbunden ist, kurzfristig auch für die Gänge 4 bis 7 ein Allradantrieb verwirklicht sein, wobei der Kraftfluss nach hinten hier über die Abtriebswelle 58 und den Zahnradsatz 64 auf die Ausgangswelle 34 und über die Sperrfunktion des Verteilerdifferenziales 32 von der Ausgangswelle 34 zur Ausgangswelle 36 und zu den Hinterrädern des Kraftfahrzeuges verläuft.

In der Neutralstellung der Doppelkupplung K2 ist die Ausgangswelle 34 unterbrochen bzw. vom Zahnradsatz 64 abgekoppelt.

Demzufolge kann auch der 8. Vorwärtsgang nur auf das vordere Achsdifferenzial 12 abtreiben, weil in der entsprechenden Schaltstellung der Doppelkupplung K2 die Ausgangswelle 34 zum Verteilerdifferenzial 32 ebenfalls abgekoppelt ist.

Die Erfindung ist nicht auf die beschriebenen Ausführungsbeispiele beschränkt. Gegebenenfalls kann die Kupplung K bzw. die Doppelkupplung K2 auch eine hydraulisch gesteuerte Lamellenkupplung sein. Die beschriebenen Teilgetriebe können gegebenenfalls auch in zwei Getriebegehäusen angeordnet sein, mit entsprechender Verbindung (zum Beispiel Steckverbindungen) der an- und abtreibenden Wellen zueinander.

## Patentansprüche

1. Antriebsanordnung für ein Kraftfahrzeug mit zwei angetriebenen Achsen, wobei wenigstens eine der Achsen zu- bzw. abschaltbar ist, mit einem Geschwindigkeits-Wechselgetriebe (10; 50) mit zumindest einer Eingangswelle, zwei je eine Achse antreibende Abtriebswellen (18, 20; 58, 60) und mehreren über Zahnräder und Synchronkupplungen schaltbaren Vorwärtsgängen und gegebenenfalls einem Rückwärtsgang, **dadurch gekennzeichnet, dass** das Wechselgetriebe (10; 50) in zwei Teilgetriebe aufgeteilt ist, von denen ein Teilgetriebe über einen Teil der Vorwärtsgänge und die eine Abtriebswelle (18; 58) ausschließlich auf eine erste Achse (12) abtreibt und das zweite Teilgetriebe über den restlichen Teil der Vorwärtsgänge und gegebenenfalls den Rückwärtsgang auf beide Abtriebswellen (18, 20; 58, 60) abtreibt.

2. Antriebsanordnung nach Anspruch 1, **dadurch gekennzeichnet, dass** bei einem Wechselgetriebe (10; 50) mit mehreren Vorwärtsgängen zumindest der niedrigste Vorwärtsgang oder mehrere niedrige Vorwärtsgänge, insbesondere zwei oder drei der niedrigsten Vorwärtsgänge, und gegebenenfalls der Rückwärtsgang dem zweiten, beide Abtriebswellen (18, 20; 58, 60) antreibenden Teilgetriebe zugeordnet sind.

3. Antriebsanordnung nach Anspruch 1 oder 2, **dadurch gekennzeichnet, dass** die zwei Teilgetriebe in einem einheitlichen Getriebegehäuse (14) angeordnet sind, wobei die zwei koaxial im Getriebegehäuse (14) gelagerten Abtriebswellen (18, 20) über eine schaltbare Kupplung (K; K2) miteinander verbindbar sind.

4. Antriebsanordnung nach Anspruch 3, **dadurch gekennzeichnet, dass** die schaltbare Kupplung (K2) eine Doppelsynchronkupplung ist, in deren einer Schaltstellung die beiden Abtriebswellen (18, 20) miteinander gekoppelt sind und in deren anderer Schaltstellung eine weiterer Vorwärtsgang (7), insbesondere ein ins Schnelle übersetzter E-Gang schaltbar ist, der über die erste Abtriebswelle (18) nur auf die eine Achse (12) des Kraftfahrzeuges abtreibt.

5. Antriebsanordnung nach einem der vorhergehenden Ansprüche, **dadurch gekennzeichnet, dass** die zweite Abtriebswelle (20) des Wechselgetriebes (10) eine Hohlwelle ist, die ein nachgeschaltetes Verteilerdifferenzial (32) antreibt, dessen eines Abtriebselement (36) mit der abschaltbaren Achse verbunden ist und dessen anderes Abtriebselement (34) im Rücktrieb durch die hohle Abtriebswelle (20) hindurchgeführt ist und über die schaltbare Kupplung (K; K2) mit der ersten Abtriebswelle (18) kuppelbar ist.

6. Antriebsanordnung nach einem der vorhergehenden Ansprüche, **dadurch gekennzeichnet, dass** das Wechselgetriebe ein Doppelkupplungsgetriebe (50) mit zwei koaxial gelagerten Eingangswellen (52, 54) ist, die alternierend über die Doppelkupplung (56) von der Antriebsmaschine beaufschlagbar sind und die in der Aufteilung in zwei Teilgetriebe über das erste Teilgetriebe mit mehreren Vorwärtsgängen die erste Abtriebswelle (58) nur zu der einen Achse (12) des Kraftfahrzeuges und über das zweite Teilgetriebe über mehrere Vorwärtsgänge und gegebenenfalls einen Rückwärtsgang auf die achsparallel zur ersten Abtriebswelle (58) angeordnete zweite Abtriebswelle (60) abtreibt, die zudem über einen Zahnradsatz (64) mit der ersten Abtriebswelle (58) gekoppelt ist.

7. Antriebsanordnung nach Anspruch 6, **dadurch gekennzeichnet, dass** die zweite Abtriebswelle (60) als eine Hohlwelle ausgeführt ist und das Ausgleichsgehäuse (30) eines nachgeschalteten Verteilerdifferenziales (32) antreibt, das über eine erste Ausgangswelle (36) die zweite Achse des Kraftfahrzeuges antreibt und im Rücktrieb durch die Hohlwelle (60) hindurch über eine zweite Ausgangswelle (34) trieblich über den Zahnradsatz (64) mit der ersten Abtriebswelle (58) gekoppelt ist.

8. Antriebsanordnung nach Anspruch 7, **dadurch gekennzeichnet, dass** die schaltbaren Loszahnräder der beide Achsen antreibenden Vorwärtsgänge und gegebenenfalls des Rückwärtsganges des zweiten Teilgetriebes auf der zweiten, als Hohlwelle ausgebildeten Abtriebswelle (60) angeordnet sind und somit ohne zusätzliche schaltbare Kupplung die Antriebsverbindung auf die erste Abtriebswelle (58) und die zweite Abtriebswelle (60) bzw. die Ausgangswelle (34) zum Antrieb beider Achsen herstellen.

9. Antriebsanordnung nach Anspruch 6 oder 7, **dadurch gekennzeichnet, dass** in der zweiten Abtriebswelle bzw. in der Ausgangswelle (34) des Verteilerdifferenziales (32) zum Antrieb der einen Achse (12) des Kraftfahrzeuges eine Doppelkupplung (K2) angeordnet ist, die in der einen Schaltstellung die beiden Teilgetriebe miteinander koppelt und in der anderen Schaltstellung einen zusätzlichen Vorwärtsgang (8) mit einem Loszahnrad (70) auf der Abtriebs- bzw. Ausgangswelle (34a) und einem Festzahnrad (72) auf der einen Eingangswelle (52) aktiv schaltet.

10. Antriebsanordnung nach einem der Ansprüche 6 bis 9, **dadurch gekennzeichnet, dass** in einem Fahrzustand mit nur einer angetriebenen Achse (12) bei auftretenden Radschlupf temporär über die zweite Trennkupplung der Doppelkupplungseinrichtung (56) ein auf beide Achsen abtreibender Vorwärtsgang bei in Schlupfbetrieb gesteuerter Trennkupplung zugeschaltet ist.

11. Antriebsanordnung nach einem der vorhergehenden Ansprüche, **dadurch gekennzeichnet, dass** in einem Fahrzustand (Gänge R, 1 bis 3) des Kraftfahrzeuges mit nur einer angetriebenen Achse (12) die zweite Achse durch Ankoppeln der Ausgangswelle (34) über die Zahnradstufe (64) und die Doppelkupplung (K2) an die erste Abtriebswelle (58) temporär ein Allradantrieb gesteuert ist, wobei der Kraftfluss direkt über das als Sperrdifferenzial ausgeführte Verteilerdifferenzial (32) auf die zweite Ausgangswelle (36) zur zweiten Achse verläuft.

## Claims

1. Drive assembly for a motor vehicle comprising two driven axles, it being possible to connect and disconnect at least one of the axles, comprising a variable speed gearbox (10; 50) having at least one input shaft, two driven shafts (18, 20; 58, 60) each driving one axle, and a plurality of forward gears and optionally one reverse gear which can be connected via gear wheels and synchronous clutches, **characterised in that** the variable speed gearbox (10; 50) is divided into two sub-gearboxes, of which one sub-gearbox drives exclusively a first axle (12) via a portion of the forward gears and one driven shaft (18; 58) and the second sub-gearbox drives the two driven shafts (18, 20; 58, 60) via the remainder of the forward gears and optionally the reverse gear.

2. Drive assembly according to claim 1, **characterised in that**, in a variable speed gearbox (10; 50) having a plurality of forward gears, at least the lowest forward gear or a plurality of low forward gears, in particular two or three of the lowest forward gears, and optionally the reverse gear are assigned to the second sub-gearbox which drives the two driven shafts (18, 20; 58, 60).

3. Drive assembly according to either claim 1 or claim 2, **characterised in that** the two sub-gearboxes are arranged in a common gearbox housing (14), it being possible to interconnect the two driven shafts (18, 20), which are coaxially supported in the gearbox housing (14), via a switchable clutch (K; K2).

4. Drive assembly according to claim 3, **characterised in that** the switchable clutch (K2) is a dual-synchronous clutch, in one switching position of which the two driven shafts (18, 20) are coupled to one another and in the other switching position of which an additional forward gear (7), in particular a stepped-up E-gear, can be connected, which drives only one axle (12) of the motor vehicle via the first driven shaft (18).

5. Drive assembly according to any of the preceding claims, **characterised in that** the second driven shaft (20) of the variable speed gearbox (10) is a hollow shaft which drives a downstream inter-axle differential (32), one driven element (36) of which is connected to the axle which can disconnected and the other driven element (34) of which is guided through the hollow driven shaft (20) in reverse gear and can be coupled to the first driven shaft (18) via the switchable clutch (K; K2).

6. Drive assembly according to any of the preceding claims, **characterised in that** the variable speed gearbox is a dual-clutch gearbox (50) comprising two coaxially supported input shafts (52, 54) which can be alternately acted on by the engine via the dual clutch (56), and which, when divided into two sub-gearboxes, drives the first driven shaft (58) to drive only one axle (12) of the motor vehicle via the first sub-gearbox having a plurality of forward gears and drives the second driven shaft (60), via the second sub-gearbox via a plurality of forward gears and optionally a reverse gear, which second driven shaft is arranged axially parallel to the first driven shaft (58) and is additionally coupled to the first driven shaft (58) via a gear wheel set (64).

7. Drive assembly according to claim 6, **characterised in that** the second driven shaft (60) is produced as a hollow shaft and drives the differential casing (30) of a downstream inter-axle differential (32), which via a first output shaft (36) drives the second axle of the motor vehicle and is drivingly coupled to the first driven shaft (58) via the gear wheel set (64) in reverse gear through the hollow shaft (60) via a second output shaft (34).

8. Drive assembly according to claim 7, **characterised in that** the switchable idler gear wheels of the forward gears driving the two axles and optionally of the reverse gear of the second sub-gearbox are arranged on the second driven shaft (60) formed as a hollow shaft and thereby establish the drive connection to the first driven shaft (58) and the second output shaft (60) or the output shaft (34) for driving the two axles without an additional switchable clutch.

9. Drive assembly according to either claim 6 or claim 7, **characterised in that** a dual clutch (K2) is arranged in the second driven shaft or in the output shaft (34) of the inter-axle differential (32) for driving one axle (12) of the motor vehicle, which dual clutch couples the two sub-gearboxes in one switching position and in the other switching position actively connects an additional forward gear (8) to a idler gear wheel (70) on the driven shaft or output shaft (34a) and a fixed gear wheel (72) on one input shaft (52).

10. Drive assembly according to any of claims 6 to 9, **characterised in that**, in a driving state where there is only one driven axle (12), if wheel slip occurs, a forward gear driving the two axles is temporarily connected via the second separation clutch of the dual-clutch device (56) in the case of a separation clutch controlled in slip mode.

11. Drive assembly according to any of the preceding claims, **characterised in that**, in a driving state (gears R, 1 to 3) of the motor vehicle where there is only one driven axle (12), the second axle is temporarily controlled in all-wheel drive by connecting the output shaft (34) via the gear wheel stage (64) and the dual clutch (K2) to the first driven shaft (58), the flow of force running directly via the inter-axle differential (32) designed as a limited-slip differential onto the second output shaft (36) to the second axle.

## Revendications

1. Aménagement menant pour un véhicule automobile avec deux essieux entraînés, dans lequel au moins l'un des essieux peut être enclenché ou désenclenché, une boîte de changement de vitesses (10 ; 50) avec au moins un arbre d'entrée, deux arbres menés (18, 20 ; 58, 60) entraînant respectivement un essieu et plusieurs marches avant commutables via des pignons et des accouplements synchrones et, éventuellement, une marche arrière, **caractérisé en ce que** la boîte de vitesses (10 ; 50) est subdivisée en deux boîtes partielles, dont l'une, via une partie des marches avant et le premier arbre mené (18 ; 58), entraîne exclusivement un premier essieu (12) et la seconde, via la partie restante des marches avant et éventuellement de la marche arrière, entraîne les deux arbres menés (18, 20 ; 58, 60).

2. Aménagement menant selon la revendication 1, **caractérisé en ce que**, dans une boîte de changement de vitesses (10 ; 50) à plusieurs marches avant, au moins la marche avant la plus basse ou plusieurs marches avant basses, en particulier deux ou trois des marches avant les plus basses, et éventuellement la marche arrière sont affectées à la seconde boîte de vitesses entraînant les deux arbres menant (18, 20 ; 58, 60).

3. Aménagement menant selon la revendication 1 ou la revendication 2, **caractérisé en ce que** les deux boîtes de vitesses sont aménagées dans un seul boîtier de transmission (14), dans lequel les deux arbres menés (18, 20) montés coaxialement dans le boîtier de transmission peuvent être raccordés l'un à l'autre via un accouplement commutable (K ; K2).

4. Aménagement menant selon la revendication 3, **caractérisé en ce que** l'accouplement commutable (K2) est un accouplement synchrone double, dans une position de commutation duquel les deux arbres menés (18, 20) sont accouplés l'un à l'autre et dans l'autre position duquel une autre marche avant (7) peut être commutée, en particulier un marche E pour faire court, qui entraîne seulement le premier essieu (12) du véhicule automobile via le premier arbre mené (18).

5. Aménagement menant selon l'une quelconque des revendications précédentes, **caractérisé en ce que** le second arbre mené (20) de la boîte de vitesses (10) est un arbre creux qui entraîne un différentiel distributeur (32) branché en aval, dont un premier élément mené (36) est raccordé à l'essieu dé-commutable et dont l'autre élément mené (34) est traversé en sens inverse par l'arbre mené creux (20) et peut être accouplé au premier arbre mené (18) via l'accouplement commutable (K ; K2).

6. Aménagement menant selon l'une quelconque des revendications précédentes, **caractérisé en ce que** la boîte de vitesses est une boîte d'accouplement double (50) avec deux arbres d'entrée (52, 54) montés coaxialement, qui peuvent être alimentés en alternance via l'accouplement double (56) par la machine d'entraînement et qui, en raison de la division en deux boîtes partielles, entraîne, via la première boîte partielle avec plusieurs marches avant, le premier arbre mené (58) uniquement sur le premier essieu (12) du véhicule automobile et via la seconde boîte partielle ayant plusieurs marches avant et éventuellement une marche arrière sur le second arbre mené (60) agencé avec son axe parallèle à celui du premier arbre mené (58) et qui est accouplé en outre au premier arbre mené (58) via un jeu de pignons (64).

7. Aménagement menant selon la revendication 6, **caractérisé en ce que** le second arbre mené (60) se présente sous la forme d'un arbre creux et le boîtier de compensation (30) entraîne un différentiel distributeur (32) commuté en aval qui, via un premier arbre de sortie (36), entraîne le second essieu du véhicule automobile et est accouplé, en sens inverse à travers l'arbre creux (60) via un second arbre de sortie (34) en passant par le jeu de pignons (64), avec le premier arbre mené (58).

8. Aménagement menant selon la revendication 7, **caractérisé en ce que** les pignons commutables des marches avant entraînant les deux essieux et éventuellement de la marche arrière de la seconde boîte partielle sont agencées sur le second arbre de sortie (60) conformé en arbre creux et, par suite, restaurent, sans accouplement commutable supplémentaire, la liaison d'entraînement sur le premier arbre mené (58) et le second arbre mené (60) ou l'arbre de sortie (34) pour l'entraînement des deux essieux.

9. Aménagement menant selon la revendication 6 ou la revendication 7, **caractérisé en ce que**, dans le second arbre mené ou dans l'arbre de sortie (34) du différentiel distributeur (32), il est agencé pour entraîner le premier essieu (12) du véhicule automobile, un accouplement double (K2) qui, dans la première position de commutation, accouple l'une à l'autre les deux boîtes partielles et, dans l'autre position de commutation, commute de manière active une marche avant supplémentaire (8) avec un pignon mobile (70) sur l'arbre mené ou l'arbre de sortie (34a) et un pignon fixe (72) sur le premier arbre mené (52).

10. Aménagement menant selon l'une quelconque des revendications 6 à 9, **caractérisé en ce que**, dans un premier état de conduite, avec seulement un essieu entraîné (12) tandis qu'il apparaît temporairement un patinage des roues en raison du second accouplement séparé du dispositif d'accouplement double (56), une marche avant entraînant les deux essieux est affectée dans l'accouplement séparé commandé en fonctionnement de patinage.

11. Aménagement menant selon l'une quelconque des revendications précédentes, **caractérisé en ce que**, dans un état de conduite (marches R, 1 à 3) du véhicule automobile avec seulement un essieu entraîné (12), le second essieu, par accouplement de l'arbre de sortie (34) via l'étage de pignons (64) et l'accouplement double (K2) sur le premier arbre mené (58), temporairement un entraînement de toutes les roues est commandé, dans lequel le flux d'énergie s'écoule directement via le différentiel distributeur (32) qui se présente sous la forme d'un différentiel de blocage, sur le second arbre de sortie (36) jusqu'au second essieu.
